# EUROPÄISCHE PATENTSCHRIFT

(11) **EP 3 710 337 B1**
(45) Veröffentlichungstag und Bekanntmachung des Hinweises auf die Patenterteilung: **16.10.2024**
(21) Anmeldenummer: 18800850.2
(22) Anmeldetag: 29.10.2018
(51) Int. Cl.: B62D 15/02, G08G 1/16

(54) **VERFAHREN ZUR STEUERUNG EINES PARKVORGANGS EINES KRAFTFAHRZEUGS**
METHOD FOR CONTROLLING A PARKING OPERATION OF A MOTOR VEHICLE
PROCÉDÉ DE COMMANDE D'UNE OPÉRATION DE STATIONNEMENT D'UN VÉHICULE AUTOMOBILE

(30) Priorität: 14.11.2017 DE 102017220247
(43) Veröffentlichungstag der Anmeldung: 23.09.2020
(73) Patentinhaber: Continental Autonomous Mobility Germany GmbH, 85057 Ingolstadt (DE)
(72) Erfinder: EDLING, Frank, 65824 Schwalbach (DE); KRANZ, Tobias, 63791 Karlstein a.M. (DE); OBERMAIER, Robert, 93155 Hemau-Hohenschambach (DE)
(74) Vertreter: Continental Corporation
(86) Internationale Anmeldenummer: PCT/DE2018/200098
(87) Internationale Veröffentlichungsnummer: WO 2019/096357

(56) Entgegenhaltungen:
- EP-A1- 3 364 264
- WO-A1-2006/064544
- DE-A1- 102009 051 463
- DE-A1- 102012 022 087
- JP-A- 2017 007 399

## Beschreibung

Die Erfindung betrifft ein Verfahren zur Steuerung eines Parkvorgangs unter Berücksichtigung der Position des Fahrzeugnutzers.

Aus dem Stand der Technik sind Parkassistenzsysteme für Fahrzeuge bekannt, mittels denen Parkvorgänge automatisiert bzw. teilautomatisiert vollzogen werden können. Derartige Parkvorgänge können beispielsweise Einpark- oder Ausparkvorgänge sein. Hierbei können unterschiedliche Parksituationen auftreten, beispielsweise Parallel-Parksituationen, in denen das Fahrzeug parallel oder im Wesentlichen parallel zur Fahrbahn in eine bzw. aus einer Parklücke manövriert wird oder Senkrecht- bzw. Schräg-Parksituationen, in denen das Fahrzeug in eine quer zur Fahrbahn ausgerichtete Parklücke ein- bzw. ausgeparkt wird.

Nachteilig an den bekannten Parkassistenzsystemen ist, dass für den Fall, dass sich der Fahrzeugnutzer nicht innerhalb des Fahrzeugs befindet, sondern außerhalb und das Parkassistenzsystem das Fahrzeug quasi ferngesteuert in die bzw. aus der Parklücke manövriert, die Position des Fahrzeugnutzers nicht berücksichtigt wird. Dadurch kann es vorkommen, dass der Fahrzeugnutzer selbst in der Fahrzeugbewegungsbahn steht bzw. sich an der Zielposition befindet, in die das Fahrzeug durch das Parkassistenzsystem bewegt werden soll. Dieses Problem tritt insbesondere dadurch auf, dass der Fahrzeugnutzer die von Parkassistenzsystem vorgeschlagene Fahrzeugbewegungsbahn bzw. Fahrzeugzielposition nicht kennt. Dies kann dazu führen, dass das Fahrzeug beim Parkvorgang eine Notbremsung einleiten muss, um eine Kollision mit dem Fahrzeugnutzer zu vermeiden und der Fahrzeugnutzer daraufhin seine Position ändern muss. Derartige Situationen werden von Fahrzeugnutzern als bedrohlich und umständlich wahrgenommen.

Aus der Druckschrift JP2017007399A ist eine Parkunterstützungsvorrichtung zum Unterstützen eines Parkvorgangs bekannt, wobei ein eigenes Fahrzeug durch einen Bediener ferngesteuert in eine Parklücke bewegt wird, umfassend: eine Parkroutenberechnungseinheit zum Berechnen einer Parkroute, entlang der das eigene Fahrzeug in der Parklücke ankommt; eine Hindernisbestimmungseinheit zum Bestimmen, ob ein Hindernis auf der Parkroute vorhanden ist oder nicht; und eine Bedienerbestimmungseinheit zum Bestimmen, ob das Hindernis ein Bediener ist oder nicht und durch die Hindernisbestimmungseinheit bestimmt wird, dass ein Hindernis auf der Parkroute vorhanden ist. Die Parkroutenberechnungseinheit berechnet eine Parkroute unter Umgehung des Hindernisses für den Fall, dass durch die Operatorbestimmungseinheit festgestellt wird, dass das Hindernis kein Bediener ist. Dokument JP2017007399A offenbart insbesondere ein Verfahren zur Steuerung eines Parkvorgangs eines Fahrzeugs durch ein Parkassistenzsystem, umfassend folgende Schritte:
- Erfassen der Position eines in der Nähe aber außerhalb des Fahrzeugs, befindlichen Fahrzeugnutzers;
- Ermitteln einer vorläufigen Fahrzeugzielposition und einer vorläufigen Fahrzeugbewegungsbahn basierend auf der Fahrzeugstartposition und der Position des Fahrzeugnutzers;
- Prüfen, ob die vorläufige Fahrzeugzielposition und/oder das Bewegen des Fahrzeugs in die vorläufige Fahrzeugzielposition auf der vorläufigen Fahrzeugbewegungsbahn eine Kollision mit dem Fahrzeugnutzer hervorruft.

Aus der WO2006064544A1 ist ein Garagenparkhilfesystem bekannt, bei dem alle Wege zwischen dem Fahrzeug und der Parklücke durchsucht werden, da bei einem Hindernis zwischen dem Fahrzeug und er Parklücke keine Einparkhilfe möglich ist. Daraus wird ein kürzester Kurs abgeleitet, bei dem das Fahrzeug nicht mit einem Hindernis in Berührung kommt, und das Fahrzeug wird so gesteuert, dass es diesem Kurs folgt. Folglich kann das Einparken auch dann unterstützt werden, wenn sich zwischen dem Fahrzeug und der Parklücke ein Hindernis befindet.

Die Druckschrift DE102009051463A1 offenbart ein Kraftfahrzeug mit einer zugeordneten externen Steuerungsvorrichtung und einem Park-Lenk-Assistenzsystem umfassend eine kraftfahrzeugseitige Steuerungseinrichtung, wobei die externe Steuerungsvorrichtung zur Kommunikation mit der kraftfahrzeugseitigen Steuerungseinrichtung ausgebildet ist und die kraftfahrzeugseitige Steuerungseinrichtung unter Berücksichtigung der im Rahmen der Kommunikation übertragenen Signale zur Ermittlung einer Ortsinformation über den Aufenthaltsort des Fahrers und/oder einen vom Fahrer vorgegebenen Zielort ausgebildet ist, wobei ein durch die kraftfahrzeugseitige Steuerungseinrichtung gesteuerter Ausparkvorgang unter Berücksichtigung der Ortsinformation durchführbar ist.

Die Druckschrift DE 10 2012 022 078 A1 offenbart ein Verfahren zum Steuern eines Ein- oder Ausparkvorgangs eines Fahrzeugs. Bei dem Verfahren wird eine Position einer dem Fahrzeug zugeordneten und außerhalb des Fahrzeugs befindlichen Bezugsvorrichtung bestimmt. In Abhängigkeit von einem Auswerten der Position der Bezugsvorrichtung wird der Ein- oder Ausparkvorgang des Fahrzeugs gesteuert. Die Bezugsvorrichtung kann beispielsweise eine mobile von einem Benutzer des Fahrzeugs tragbare Vorrichtung umfassen, beispielsweise einen so genannten Identifikationsgeber für ein Zugangssystem des Fahrzeugs, welcher auch zum Öffnen und Schließen und Starten des Fahrzeugs verwendet werden kann. Die Bezugsvorrichtung kann beispielsweise einen Schlüssel mit einer Funkfernbedienung umfassen, welcher zusätzliche Bedienelemente, wie zum Beispiel Bedientasten, umfasst, um den Ein- oder Ausparkvorgang einzuleiten.

Ausgehend hiervon ist es Aufgabe der Erfindung, ein Verfahren zur Steuerung eines Parkvorgangs anzugeben, das basierend auf den Standortinformationen des Fahrzeugnutzers einen verbesserten Parkvorgang ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Fahrzeug mit einem Parkassistenzsystem ist Gegenstand des nebengeordneten Patentanspruchs 12.

Gemäß einem ersten Aspekt bezieht sich die Erfindung auf ein Verfahren zur Steuerung eines Parkvorgangs eines Fahrzeugs durch ein Parkassistenzsystem. Das Verfahren umfasst dabei die folgenden Schritte:
Zunächst wird die Position eines in der Nähe aber außerhalb des Fahrzeugs, befindlichen Fahrzeugnutzers erfasst. Dies kann über aus dem Stand der Technik bekannte Techniken erfolgen, beispielsweise über die Erfassung der Position des Fahrzeugschlüssels, eines mobilen Endgeräts (Handy, Smartphone, Tablet-PC etc.) des Fahrzeugnutzers oder aber auch durch andere Sensoriken, beispielsweise am Fahrzeug verbaute Kameras, Radarsysteme, Wärmebildsysteme, Inter-Fahrzeug-Kommunikation etc.

Anschließend wird eine vorläufige Fahrzeugzielposition und eine vorläufige Fahrzeugbewegungsbahn basierend auf der Fahrzeugstartposition und der Position des Fahrzeugnutzers bestimmt. Nach der Festlegung der vorläufigen Fahrzeugzielposition und einer vorläufigen Fahrzeugbewegungsbahn wird überprüft, ob die vorläufige Fahrzeugzielposition und/oder das Bewegen des Fahrzeugs in die vorläufige Fahrzeugzielposition auf der vorläufigen Fahrzeugbewegungsbahn eine Kollision mit dem Fahrzeugnutzer hervorruft.

Falls an der vorläufigen Fahrzeugzielposition oder beim Bewegen des Fahrzeugs in die vorläufige Fahrzeugzielposition eine Kollision mit dem Fahrzeugnutzer auftritt, wird die vorläufige Fahrzeugzielposition in eine abgewandelte Fahrzeugzielposition abgeändert und/oder die vorläufige Fahrzeugbewegungsbahn wird in eine abgewandelte Fahrzeugbewegungsbahn abgeändert. Die abgewandelte Fahrzeugzielposition und/oder die abgewandelte Fahrzeugbewegungsbahn werden dabei derart gewählt, dass an der abgewandelten Fahrzeugzielposition und/oder beim Bewegen des Fahrzeugs auf der abgewandelten Fahrzeugbewegungsbahn keine Kollision mit dem Fahrzeugnutzer auftritt. Dies kann entweder durch reine Modifikation der Fahrzeugzielposition bzw. Fahrzeugbewegungsbahn erfolgen oder aber auch, wenn nötig, durch eine Positionsänderung des Fahrzeugnutzers, falls beispielsweise ohne diese der Parkvorgang nicht durchführbar ist.

Es versteht sich, dass die zuvor genannten Schritte in einer Schleife, insbesondere einer Endlosschleife ablaufen können, bis der Parkvorgang beendet ist, d.h. das Fahrzeug in die Fahrzeugzielposition (ursprünglich ausgewählte oder abgewandelte) bewegt wurde. In anderen Worten läuft also die Kollisionsprüfung mit dem Fahrzeugnutzer solange, bis der Parkvorgang beendet wurde. Dadurch wird erreicht, dass auch bei einer Bewegung des Fahrzeugnutzers während des Parkvorgangs diese Positionsänderung erfasst wird und der Parkvorgang (Fahrzeugzielposition, Fahrzeugbewegungsbahn) unter Berücksichtigung des neuen Standorts des Fahrzeugnutzers ggf. umgeplant werden kann.

Die Fahrzeugbewegungsbahn kann aus mehreren Zügen zusammengesetzt sein, beispielsweise einer Kombination aus einem oder mehreren Vorwärts- und Rückwärtszügen.

Der wesentliche Vorteil des erfindungsgemäßen Verfahrens besteht darin, dass der Parkvorgang unter Berücksichtigung der Position des Fahrzeugnutzers verbessert geplant und für den Fahrzeugnutzer sicherer und effizienter vollzogen werden kann.

Gemäß einem Ausführungsbeispiel wird an dem Fahrzeug ein Signal abgegeben und/oder an ein dem Fahrzeugnutzer zugeordnetes Gerät werden Hinweisinformationen übermittelt, die den Fahrzeugnutzer darüber informieren, dass dieser seine aktuelle Position verändern muss, um einen Parkvorgang zu ermöglichen, wenn keine abgewandelte Fahrzeugzielposition und/oder keine abgewandelte Fahrzeugbewegungsbahn bestimmbar ist, die keine Kollision mit dem Fahrzeugnutzer hervorruft. Dadurch kann der Fahrzeugnutzer bereits frühzeitig (ohne Bewegung des Fahrzeugs auf diesen zu und eine ggf. eingeleitete Notbremsung) informiert werden, dass er seinen Standort wechseln muss, um den Parkvorgang zu ermöglichen. Die Hinweisinformationen können optische oder akustische Informationen sein. Insbesondere können die Hinweisinformationen den Fahrzeugnutzer darüber informieren, in welche Richtung und/oder wie weit dieser sich bewegen muss, um den Einparkvorgang durchführen zu können.

Gemäß einem Ausführungsbeispiel umfasst der Schritt des Veränderns der vorläufigen Fahrzeugzielposition in eine abgewandelte Fahrzeugzielposition ein Verändern der vorläufigen Fahrzeugzielposition in zumindest eine, vorzugsweise in zwei unterschiedliche Raumrichtungen. Dadurch kann erreicht werden, dass an der abgewandelten Fahrzeugzielposition keine Kollision mit dem Fahrzeugnutzer auftritt.

Gemäß einem Ausführungsbeispiel wird die vorläufige Fahrzeugzielposition oder die abgewandelte Fahrzeugzielposition derart angepasst, dass sich nach dem Bewegen des Fahrzeugs in die Fahrzeugzielposition die Position der Fahrertür in engem räumlichem Zusammenhang mit der Position des Fahrzeugnutzers, vorzugsweise in einem Abstand kleiner als 2m, insbesondere kleiner 1m, befindet. Dadurch kann ein erleichtertes Einsteigen des Fahrzeugnutzers in das Fahrzeug erreicht werden, da die Fahrzeugtür beispielsweise in Griffweite zu diesem positioniert wird.

Gemäß einem Ausführungsbeispiel erfolgt die Anpassung der vorläufigen oder abgewandelten Fahrzeugzielposition unter Berücksichtigung der Parktrajektorie, auf der das Fahrzeug beim Parkvorgang bewegt wird. Insbesondere wird die vorläufige bzw. abgewandelte Fahrzeugzielposition derart gewählt, dass diese ohne oder nur mit geringem Rangieraufwand erreichbar ist. Dadurch können umständliche Parkmanöver wirksam vermieden werden.

Gemäß einem Ausführungsbeispiel wird während des Parkvorgangs die Position des Fahrzeugnutzers überwacht. Dadurch können während des Parkvorgangs vorgenommene Positionsänderungen des Fahrzeugnutzers erkannt werden. Im Falle, dass durch diese Positionsänderungen Kollisionsgefahr besteht, kann der Parkvorgang unterbrochen und der Fahrzeugnutzer zur Änderung seiner Position aufgefordert werden.

Gemäß einem Ausführungsbeispiel wird die Geschwindigkeit des Fahrzeugs beim Parkvorgang in Abhängigkeit vom Abstand zwischen dem Fahrzeug und dem Fahrzeugnutzer angepasst, insbesondere reduziert. Dadurch kann die Kollisionsgefahr weiter reduziert und das Sicherheitsempfinden des Fahrzeugnutzers gesteigert werden.

Gemäß einem Ausführungsbeispiel werden an einem dem Fahrzeugnutzer zugeordneten Gerät optische Informationen angezeigt werden, in welche Richtung und/oder wie weit sich der Fahrzeugnutzer bewegen soll. Dies ist insbesondere dann der Fall, wenn die Kollisionssituation nicht durch eine geänderte Fahrzeugzielposition bzw. geänderte Fahrzeugbewegungsbahn aufgehoben werden kann. Dadurch wird die Nutzerfreundlichkeit des Parkassistenzsystems wesentlich gesteigert.

Gemäß einem Ausführungsbeispiel werden zumindest zwei vorläufige Fahrzeugzielpositionen ermittelt und der Fahrzeugnutzer trifft an einem ihm zugeordneten Gerät eine Auswahl einer zu verwendenden, vorläufigen Fahrzeugzielposition. Dadurch kann durch Nutzerinteraktion eine für den Fahrzeugnutzer vorteilhafte Fahrzeugzielposition gefunden werden.

Gemäß einem Ausführungsbeispiel wird auf dem Gerät eine bevorzugte vorläufige Fahrzeugzielposition graphisch hervorgehoben und beispielsweise vorläufig ausgewählt. Dadurch kann dem Fahrzeugnutzer eine Unterstützung bei der Auswahl der vorläufigen Fahrzeugzielposition geboten werden.

Gemäß einem Ausführungsbeispiel erfolgt die Erfassung der Position des Fahrzeugnutzers durch Positionsbestimmung eines dem Fahrzeugnutzer zugeordneten Geräts, insbesondere eines Fahrzeugschlüssels, einer Fahrzeugbedienkarte oder eines mobilen Telekommunikationsgeräts. Dieses Gerät kann ebenso als Nutzerschnittstelle zur Eingabe von Informationen genutzt werden, basierend auf denen der Parkvorgang beeinflusst wird.

Erfindungsgemäß erfasst das Parkassistenzsystem Parksituationen, in denen der Fahrzeugnutzer nach Einnehmen der Parkposition die Parklücke nicht mehr verlassen kann. Dies ist durch aus dem Stand der Technik bekannte Sensorik und Datenverarbeitungsmittel möglich. In diesem Fall wird der Parkvorgang vor dem Einfahren in die Parklücke unterbrochen und der Fahrzeugnutzer zum Verlassen der Parklücke aufgefordert.

Gemäß einem weiteren Aspekt betrifft die Erfindung ein Fahrzeug umfassend ein Parkassistenzsystem, eine erste Sensorik zur Erfassung von Umgebungsinformationen und eine zweite Sensorik zur Erfassung der Position eines dem Fahrzeugnutzer zugeordneten Geräts. Zudem ist zumindest eine Steuereinheit zur Steuerung des Parkassistenzsystems vorgesehen. Diese Steuereinheit ist zum Ausführen der folgenden Schritte ausgebildet:
- Erfassen der Position eines in der Nähe aber außerhalb des Fahrzeugs befindlichen Fahrzeugnutzers;
- Ermitteln einer vorläufigen Fahrzeugzielposition und einer vorläufigen Fahrzeugbewegungsbahn basierend auf einer Fahrzeugstartposition und der Position des Fahrzeugnutzers;
- Prüfen, ob die vorläufige Fahrzeugzielposition und/oder das Bewegen des Fahrzeugs in die vorläufige Fahrzeugzielposition auf der vorläufigen Fahrzeugbewegungsbahn eine Kollision mit dem Fahrzeugnutzer hervorruft;
- Verändern der vorläufigen Fahrzeugzielposition in eine abgewandelte Fahrzeugzielposition und/oder Verändern der vorläufigen Fahrzeugbewegungsbahn in eine abgewandelte Fahrzeugbewegungsbahn, falls an der vorläufigen Fahrzeugzielposition oder beim Bewegen des Fahrzeugs in die vorläufige Fahrzeugzielposition eine Kollision mit dem Fahrzeugnutzer auftritt, wobei die abgewandelte Fahrzeugzielposition und/oder die abgewandelte Fahrzeugbewegungsbahn derart gewählt wird, dass an der abgewandelten Fahrzeugzielposition und/oder beim Bewegen des Fahrzeugs auf der abgewandelten Fahrzeugbewegungsbahn keine Kollision mit dem Fahrzeugnutzer auftritt,
- wobei das Parkassistenzsystem (4) zur Erfassung von Parksituationen, in denen der Fahrzeugnutzer (2) nach Einnehmen der Parkposition die Parklücke nicht mehr verlassen kann, ausgebildet ist;
- wobei der Parkvorgang vor dem Einfahren in die Parklücke unterbrochen und der Fahrzeugnutzer zum Verlassen der Parklücke aufgefordert wird, falls eine Parksituation erkannt wird, in der der Fahrzeugnutzer (2) nach Einnehmen der Parkposition die Parklücke nicht mehr verlassen kann..

Unter "Parkvorgang" im Sinne der vorliegenden Erfindung werden jegliche Bewegungen des Fahrzeugs zum Einnehmen einer Parkstellung oder zum Herausbewegen aus einer Parkstellung verstanden, also insbesondere Ein- und Ausparkvorgänge.

Unter "Gerät" im Sinne der vorliegenden Erfindung wird jegliche Einheit verstanden, die dem Fahrzeugnutzer zugeordnet werden kann, insbesondere das dieser mit sich führen kann und dessen geographische Position durch geeignete Sensorik erfassbar ist. Derartige Geräte können beispielsweise Fahrzeugschlüssel, Fahrzeugkarten, Handys, Smartphones, Tablet-PCs, Laptops oder andere tragbare Einheiten, insbesondere Telekommunikationsgeräte sein.

Unter "Kollision" im Sinne der vorliegenden Erfindung wird sowohl eine unmittelbare Kollision verstanden, d.h. das Fahrzeug berührt den Fahrzeugnutzer bzw. würde sich über dessen Standort bewegen. Zudem können auch solche Fälle als "Kollision" verstanden werden, bei denen zwar keine direkte Berührung mit dem Fahrzeugnutzer auftritt, das Fahrzeug dem Fahrzeugnutzer aber derart nahe (beispielsweise näher als 20cm, insbesondere kleiner als 15cm, 10cm oder 5cm) kommt, dass dieser sich durch das Parkmanöver bedroht fühlen würde.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und schematisch eine Ausparksituation, bei der die Fahrzeugbewegungsbahn aufgrund der Position des Fahrzeugnutzers geändert wird;
- Fig. 2: beispielhaft und schematisch eine Ausparksituation, bei der die Fahrzeugbewegungsbahn und die Fahrzeugzielposition aufgrund der Position des Fahrzeugnutzers geändert wird;
- Fig. 3: beispielhaft und schematisch eine Ausparksituation, bei der aufgrund der Position des Fahrzeugnutzers kein Ausparken möglich ist und daher ein Signal durch das Fahrzeug abgegeben wird;
- Fig. 4: beispielhaft und schematisch ein Blockdiagramm eines ein Parkassistenzsystem aufweisenden Fahrzeugs;
- Fig. 5: beispielhaft ein das Verfahren zur Steuerung des Parkvorgangs veranschaulichendes Ablaufdiagramm;
- Fig. 6: beispielhaft ein Ablaufdiagramm zur Veranschaulichung der Abläufe bei einem vom Parkassistenzsystem zumindest unterstützten Ausparkvorgang;
- Fig. 7: beispielhaft ein Ablaufdiagramm zur Veranschaulichung der Abläufe bei einem vom Parkassistenzsystem zumindest unterstützten Einparkvorgang;
- Fig. 8: beispielhaft ein Gerät mit einer graphischen Benutzeroberfläche, auf der eine Aufforderung zur Positionsänderung des Benutzers angezeigt wird; und
- Fig. 9: beispielhaft ein Gerät mit einer graphischen Benutzeroberfläche, auf der Auswahlmöglichkeiten zur Festlegung der Fahrzeugzielposition angezeigt werden.

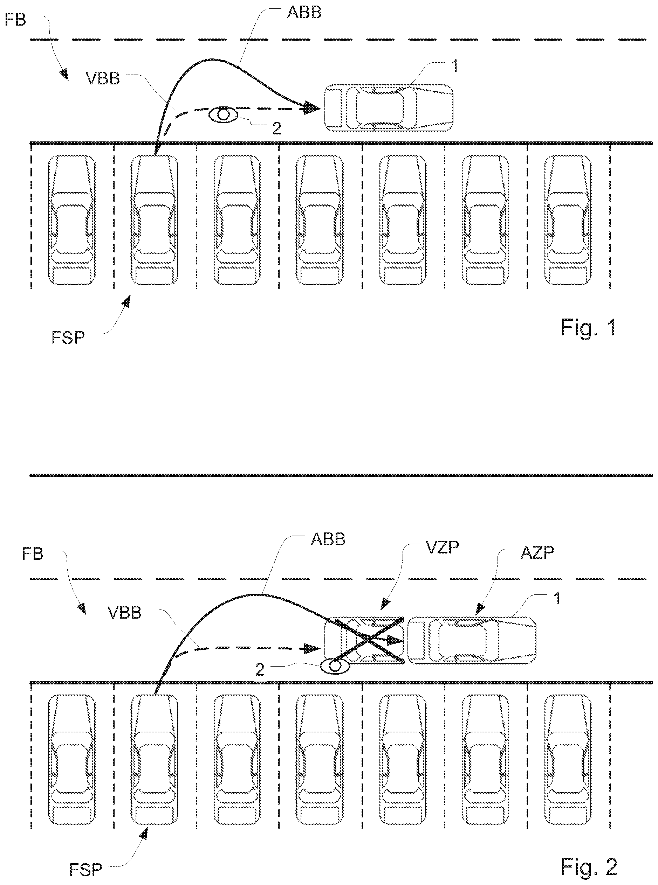

Figuren 1 bis 3 zeigen beispielhaft und schematisch Parkszenarios, bei denen ein Parkvorgang eines Fahrzeugs 1 durch ein Parkassistenzsystem gesteuert wird. Diese Parkszenarios beziehen sich jeweils auf Auspark-Situationen, in denen das Fahrzeug 1 senkrecht zur Fahrbahn FB in der Parklücke steht. Es versteht sich, dass die Erfindung auch auf Parkszenarios anwendbar ist, in denen das Fahrzeug 1 parallel oder im Wesentlichen parallel bzw. schräg zur Fahrbahn FB in einer Parklücke steht.

Unabhängig vom jeweiligen Parkszenario ist es durch das Parkassistenzsystem des Fahrzeugs 1 möglich, dass ein Einparkvorgang bzw. Ausparkvorgang durch einen Fahrzeugnutzer 2 unter Verwendung eines Geräts 3 ferngesteuert wird. Dabei befindet sich der Fahrzeugnutzer 2 und das ihm zugeordnete Gerät 3 nicht im Inneren des Fahrzeugs 1 sondern der Fahrzeugnutzer 2 und das Gerät 3 befinden Sie in räumlicher Nähe zum Fahrzeug 1, beispielsweise in einem Abstand kleiner als 10 m insbesondere kleiner als 6 m.

Das Gerät 3 kann dabei durch gängige Drahtloskommunikationsverbindungen mit dem Fahrzeug 1 gekoppelt sein, so dass zwischen dem Gerät 3 und dem Fahrzeug 1 zumindest eine unidirektionale, vorzugsweise eine bidirektionale Datenübertragung erfolgen kann. Die Drahtloskommunikationsverbindung kann beispielsweise folgende Übertragungsverfahren benutzen: Bluetooth, WLAN, ZigBee, NFC, Wibree oder WiMAX. Alternativ ist grundsätzlich auch eine optische Kommunikationsverbindung denkbar.

Das Gerät 3 kann beispielsweise durch einen Fahrzeugschlüssel, ein Telekommunikationsgerät, beispielsweise ein Handy, Smartphone, Tablet, Laptop etc. gebildet werden. Im Falle der Verwendung von Telekommunikationsgeräten weisen diese vorzugsweise eine Applikation (APP) auf, über die der Datenaustausch mit dem Fahrzeug 1, insbesondere dem Parkassistenzsystem des Fahrzeugs 1 erfolgt.

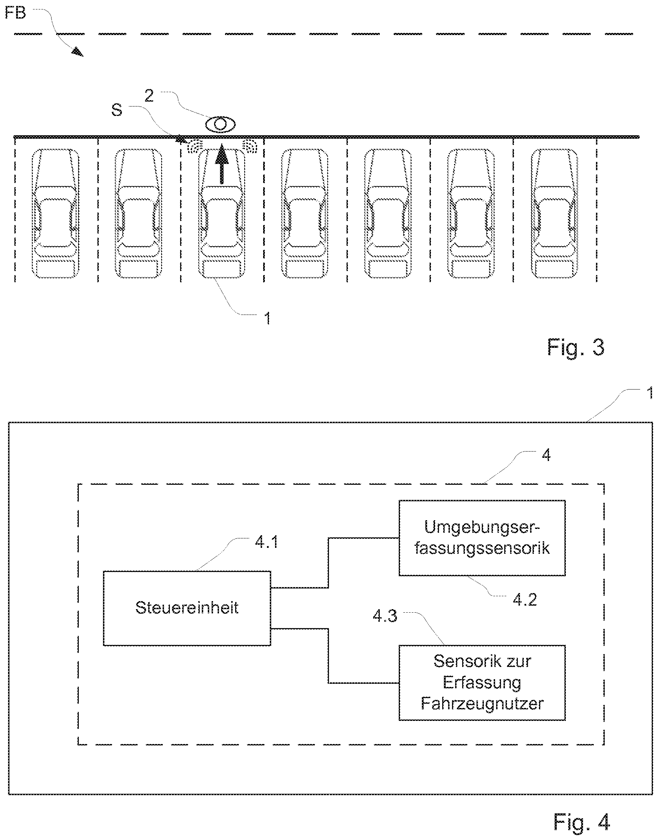

Figur 4 zeigt ein schematisches Blockschaltbild eines Fahrzeugs 1 mit einem Parkassistenzsystem 4. Das Parkassistenzsystem 4 weist in an sich bekannter Weise eine Steuereinheit 4.1 auf, mittels der die Parkassistenzfunktionen gesteuert werden. Zudem ist eine Umgebungserfassungssensorik 4.2 vorgesehen, mittels der in der räumlichen Umgebung des Fahrzeugs 1 befindliche Objekte erfassbar sind. Derartige Objekte können beispielsweise weitere parkende Fahrzeuge, Gebäude, Randsteine etc. sein. Die Umgebungserfassungssensorik 4.2 kann insbesondere eine oder mehrere Kameras, Ultraschallsensoren, zumindest einen Radarsensor etc. umfassen.

Die Umgebungserfassungssensorik 4.2 ist mit der Steuereinheit 4.1 gekoppelt. Dadurch können die von der Umgebungserfassungssensorik 4.2 erfassten Informationen an die Steuereinheit 4.1 übertragen werden, so dass diese daraus freie Parklücken detektieren kann.

Zudem weist das Fahrzeug 1 eine Sensorik 4.3 zur Erfassung des Standorts des Fahrzeugnutzers 2 auf, und zwar vorzugsweise über das ihm zugeordnete, d.h. in dessen räumlicher Nähe befindliche Gerät 3. Insbesondere kann die Sensorik 4.3 dazu ausgebildet sein, die örtliche Position des Fahrzeugschlüssels oder eines dem Fahrzeug 1 bekannten Telekommunikationsgeräts des Fahrzeugnutzers 2 zu erfassen, um daraus zu schließen, an welcher örtlichen Position sich der Fahrzeugnutzer 2 befindet.

Die Sensorik 4.3 ist ebenfalls mit der Steuereinheit 4.1 gekoppelt, so dass durch die Steuereinheit 4.1 erfassbar ist, in welcher Relativposition sich der Fahrzeugnutzer 2 bezogen auf die Parklücke, die durch die Parkassistenzfunktion angestrebte Fahrzeugzielposition nach Beendigung des Parkvorgangs, bzw. die beim Parkvorgang genutzte Bewegungsbahn (Trajektorie) des Fahrzeugs 1 befindet. Beispielsweise kann durch die Steuereinheit 4.1 eine Umgebungskarte des Bereichs um das Fahrzeug 1 erstellt werden, wobei der Fahrzeugnutzer 2 in dieser Umgebungskarte enthalten ist.

In Figur 1 ist beispielsweise ein Ausparkvorgang schematisch dargestellt. Ein Fahrzeug 1 soll aus einer Parklücke, die senkrecht zur Fahrbahn FB ausgerichtet ist, fernbedient durch den Benutzer 2, der sich im Umfeld des Fahrzeugs 1 befindet, ausgeparkt werden. Dabei wird das Fahrzeug aus einer Fahrzeugstartposition FSP durch Bewegen auf einer Fahrzeugbewegungsbahn an eine Fahrzeugzielposition bewegt, an der sich das Fahrzeug 1 am Ende des Ausparkvorgangs befindet.

Wie in Figur 1 angedeutet, würde sich das Fahrzeug 1 bei der Bewegung aus der Fahrzeugstartposition FSP an die Fahrzeugzielposition auf einer Fahrzeugbewegungsbahn bewegen, auf der sich der Fahrzeugnutzer 2 befindet. Dadurch würde eine Kollision mit dem Fahrzeugnutzer 2 verursacht werden.

Nachfolgend wird unter "Fahrzeugbewegungsbahn" sowohl eine einzügige Fahrzeugbewegungsbahn als auch eine mehrzügige Fahrzeugbewegungsbahn verstanden, d.h. eine Fahrzeugbewegungsbahn, die aus mehreren Vorwärts- und/oder Rückwärtszügen besteht.

Figur 2 zeigt ein weiteres Ausführungsbeispiel, in dem durch das Parkassistenzsystem 4 eine Fahrzeugzielposition ausgewählt wurde, an der eine Kollision mit dem Fahrzeugnutzer 2 erfolgt, d.h. der Fahrzeugnutzer 2 befindet sich an der Fahrzeugzielposition.

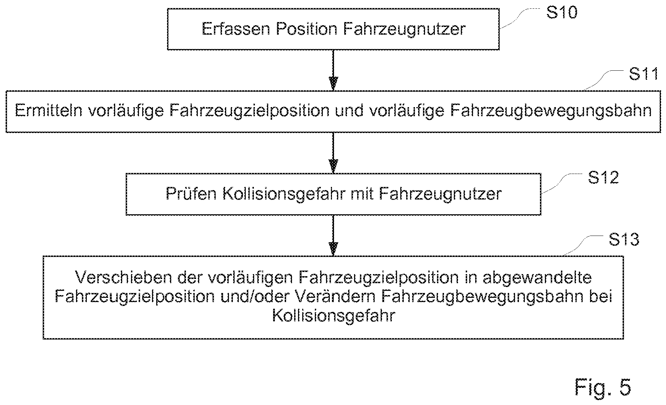

Zur Kollisionsvermeidung mit dem Fahrzeugnutzer 2 kann das Parkassistenzsystem 4 dazu ausgebildet sein, ein Kollisionsvermeidungsverfahren gemäß dem in Fig. 5 gezeigten Ablaufdiagramm zu vollziehen.

Zunächst wird die Position des Fahrzeugnutzers 2, der sich außerhalb des Fahrzeugs 1 aber in engem örtlichen Bezug zu dem Fahrzeug 1 befindet, erfasst (S10).

Anschließend wird durch das Parkassistenzsystem 4 eine vorläufige Fahrzeugzielposition VZP und eine vorläufige Fahrzeugbewegungsbahn VBB ermittelt (S11). Die vorläufige Fahrzeugzielposition VZP kann entweder durch das Parkassistenzsystem 4 allein oder aber unter Einbindung des Fahrzeugnutzers 2, insbesondere durch Interaktion des Parkassistenzsystems 4 mit dem Fahrzeugnutzer 2 über das Gerät 3 festgelegt werden.

Nach Festlegung der vorläufigen Fahrzeugzielposition VZP wird durch das Parkassistenzsystem 4 geprüft, ob eine Kollisionsgefahr mit dem Fahrzeugnutzer 2 besteht (S12). Die Kollisionsgefahrprüfung kann insbesondere eine Prüfung dahingehend enthalten, ob sich der Fahrzeugnutzer 2 an der vorläufigen Fahrzeugzielposition VZP befindet und/oder ob sich die vorläufige Fahrzeugbewegungsbahn VBB mit der Position des Fahrzeugnutzers 2 kreuzt, d.h. die vorläufige Fahrzeugbewegungsbahn VBB verläuft über die Position des Fahrzeugnutzers 2.

Für den Fall, dass die Kollisionsgefahrprüfung eine Kollisionssituation erkennt, wird die vorläufige Fahrzeugzielposition VZP auf eine abgewandelte Fahrzeugzielposition AZP verändert, d.h. die nach dem Parkvorgang einzunehmende Zielposition des Fahrzeugs 1 wird derart verschoben, dass an der abgewandelten Fahrzeugzielposition AZP keine Kollision mit dem Fahrzeugnutzer 2 mehr auftritt. Alternativ oder zusätzlich kann durch das Parkassistenzsystem 4 auch die vorläufige Fahrzeugbewegungsbahn VBB in eine abgewandelte Fahrzeugbewegungsbahn ABB verändert werden (Fig. 2), so dass auf dieser abgewandelten Fahrzeugbewegungsbahn ABB keine Kollision mit dem Fahrzeugnutzer 2 mehr auftritt (S13).

Die zuvor genannten Schritte können in einem einzelnen Durchlauf abgearbeitet werden, Alternativ können die Schritte in einer Schleife, insbesondere einer Endlosschleife ablaufen, bis der Parkvorgang beendet ist, d.h. das Fahrzeug in die Fahrzeugzielposition bewegt wurde.

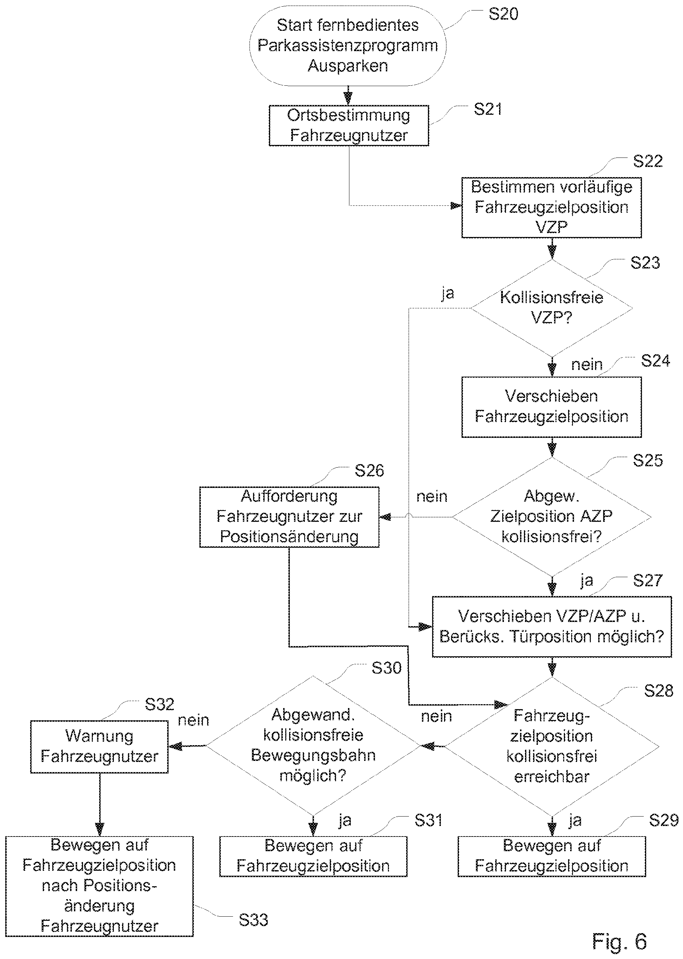

Figur 6 zeigt ein Ausführungsbeispiel eines Kollisionsvermeidungsverfahrens bei einem vom Parkassistenzprogramm unterstützten Ausparkvorgang.

Zunächst wird der fernbediente, vom Parkassistenzsystem unterstützte Ausparkvorgang gestartet (S20). Dabei befindet sich der Fahrzeugnutzer vorzugsweise bereits außerhalb des Fahrzeugs. Der Start des automatischen Ausparkvorgangs kann beispielsweise mit Hilfe eines dem Fahrzeugnutzer zugeordneten Geräts, beispielsweise einem Smartphone oder dem Fahrzeugschlüssel gestartet werden.

Nach dem Start des automatischen Ausparkvorgangs wird zunächst der Standort des Fahrzeugnutzers bestimmt (S21). Der Standort des Fahrzeugnutzers wird vorzugsweise über die Ortung der Position des ihm zugeordneten Geräts bestimmt. Diese Ortung kann über jegliche aus dem Stand der Technik bekannte und für diesen Zweck geeignete Ortungsverfahren erfolgen. Dadurch kann das Parkassistenzprogramm den Standort des Fahrzeugnutzers bei der Ermittlung der Fahrzeugzielposition und der Bewegung an diese Fahrzeugzielposition berücksichtigen.

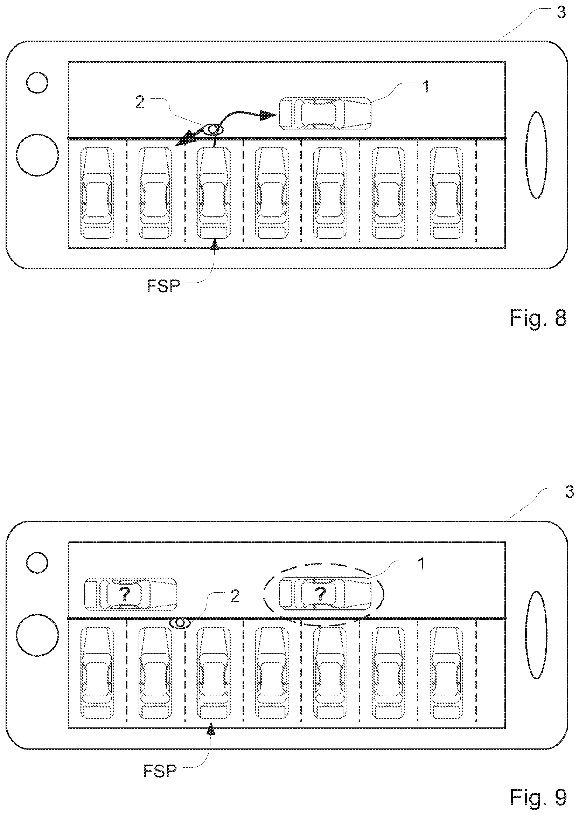

Anschließend wird durch das Parkassistenzsystem die vorläufige Fahrzeugzielposition VZP bestimmt (S22). Dies kann entweder automatisch ausschließlich durch das Parkassistenzsystem (ohne Einwirkung des Fahrzeugnutzers 2) erfolgen oder zumindest teilweise durch den Fahrzeugnutzer 2 beeinflusst werden (teilautomatisiert). Beispielsweise können, wie in Fig. 9 gezeigt, an dem Gerät 3 mehrere mögliche vorläufige Fahrzeugzielpositionen VZP angezeigt werden und der Fahrzeugnutzer 2 kann eine Auswahl treffen, welche dieser Fahrzeugzielpositionen er bevorzugt. Beispielsweise kann auch eine der Fahrzeugzielpositionen (wie in Fig. 9 durch das gestrichelte Oval angedeutet) hervorgehoben sein, um dem Fahrzeugnutzer 2 zu signalisieren, welche Fahrzeugzielposition durch das Parkassistenzsystem als bevorzugt angesehen wird. Die vorläufige Fahrzeugzielposition VZP kann abhängig davon, ob eine parallele Ausparksituation (Fahrzeuglängsachse ist parallel oder im Wesentlichen parallel zur Fahrbahn FB ausgerichtet) oder eine senkrechte Parkposition (Fahrzeuglängsachse ist senkrecht oder im Wesentlichen senkrecht zur Fahrbahn FB ausgerichtet) vorliegt, gewählt werden.

Nach dem Bestimmen der vorläufigen Fahrzeugzielposition VZP wird überprüft, ob eine Kollision mit dem Fahrzeugnutzer 2 an der vorläufigen Fahrzeugzielposition VZP vorliegt (S23), d.h. sich der Fahrzeugnutzer 2 an der Position befindet, die das Parkassistenzsystem als vorläufige Fahrzeugzielposition VZP bestimmt hat. Wenn die vorläufige Fahrzeugzielposition VZP nicht mit der Position des Fahrzeugnutzers 2 kollidiert, wird das Verfahren an dem Schritt S27 fortgesetzt.

Falls eine Kollision zwischen der Position des Fahrzeugnutzers 2 und der vorläufigen Fahrzeugzielposition VZP vorliegt (s. Fig. 2), wird versucht, eine abgewandelte Zielposition zu finden, an der keine Kollisionssituation vorliegt. In anderen Worten wird also versucht, die vorläufige Fahrzeugzielposition VZP auf eine abgewandelte Fahrzeugzielposition AZP zu verlegen bzw. zu verschieben, an der keine Kollision mit dem Fahrzeugnutzer 2 vorliegt. Diese abgewandelte Fahrzeugzielposition AZP kann insbesondere dadurch erhalten werden, dass die vorläufige Fahrzeugzielposition VZP entlang zumindest einer Raumrichtung (beispielsweise entlang der Längsrichtung der Fahrbahn FB oder quer zur Längsrichtung der Fahrbahn FB), vorzugsweise entlang zumindest zwei orthogonal zueinander verlaufenden Raumrichtungen (beispielsweise entlang der Längsrichtung der Fahrbahn FB und senkrecht zur Längsrichtung der Fahrbahn FB), verschoben wird.

Nach dieser Verlegung/Verschiebung wird überprüft, ob an der abgewandelten Fahrzeugzielposition AZP keine Kollision mit dem Fahrzeugnutzer vorliegt (S25). Die Schritte S24 und S25 können dabei mehrmals hintereinander durchlaufen werden, so dass mehrere unterschiedliche abgewandelte Fahrzeugzielpositionen AZP hinsichtlich der Kollisionsgefahr mit dem Fahrzeugnutzer 2 überprüft werden können. Für den Fall, dass keine kollisionsfreie Fahrzeugzielposition gefunden werden kann, wird der Fahrzeugnutzer aufgefordert, seine aktuelle Position bzw. seinen Standort zu ändern (S26). Dies kann entweder durch akustische oder optische Signale erfolgen, die vom Fahrzeug 1 selbst oder vom Gerät 3 abgegeben werden. Beispielsweise kann durch das Gerät 3 angegeben werden, wohin bzw. in welche Richtung sich der Fahrzeugnutzer 2 bewegen soll. Diese Positionsänderungsangabe kann insbesondere berücksichtigen, welche Position des Fahrzeugnutzers 2 vorteilhaft ist, um eine kollisionsfreie Bewegung des Fahrzeugs 1 an eine gewünschte Fahrzeugzielposition (vorläufige Fahrzeugzielposition VZP oder abgewandelte Fahrzeugzielposition AZP) zu erreichen.

In einer bevorzugten, aber optionalen Ausführungsform kann überprüft werden, ob die vorläufige Fahrzeugzielposition VZP bzw. abgewandelte Fahrzeugzielposition AZP derart verschoben werden kann, dass dem Fahrzeugnutzer 2 ein erleichterter Einstieg in das Fahrzeug 1 ermöglicht wird (S27). Dabei wird vorzugsweise überprüft, ob die Fahrzeugzielposition des Fahrzeugs 1 derart gewählt werden kann, dass die fahrerseitige Fahrzeugtür auf den Standort des Fahrzeugnutzers ausgerichtet ist. Beispielsweise wird versucht, die Fahrzeugzielposition derart zu wählen, dass der Türgriff der Fahrzeugtür in Griffreichweite des Fahrzeugnutzers angeordnet ist (beispielsweise in einem Radius kleiner als 1 m, insbesondere kleiner als 0,5m). Nach Schritt S27 steht damit die finale Fahrzeugzielposition fest. Diese kann entweder die vorläufige Fahrzeugzielposition VZP, die abgewandelte Fahrzeugzielposition AZP (nach Verschiebung zur Kollisionsverhinderung) oder eine an der Fahrzeugnutzer-Einstiegsposition ausgerichtete Fahrzeugzielposition sein.

Anschließend wird eine überprüft, ob diese finale Fahrzeugzielposition durch eine in dieser Parksituation üblicherweise verwendete Standard-Auspark-Trajektorie (vorläufige Fahrzeugbewegungsbahn VBB) kollisionsfrei zu erreichen ist (S28). Für den Fall, dass keine Kollisionsgefahr auf der Standard-Auspark-Trajektorie besteht, wird das Fahrzeug 1 auf diese finale Fahrzeugzielposition durch Verwendung der Standard-Auspark-Trajektorie bewegt (S29). Dies kann entweder direkt oder nach einer Eingabe (z.B. "Start Parkvorgang") des Fahrzeugnutzers 2 an dem Gerät 3 erfolgen. Dabei wird die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird der Ausparkvorgang unterbrochen bzw. durch das Fahrzeug 1 ein Warnsignal abgegeben.

Für den Fall, dass die Standard-Auspark-Trajektorie eine Kollision mit dem Fahrzeugnutzer 2 hervorruft (s. Fig. 1), wird überprüft, ob es möglich ist, das Fahrzeug auf einer abgewandelten Fahrzeugbewegungsbahn ABB zu bewegen, auf der keine Kollision mit dem Fahrzeugnutzer 2 auftritt (S30).

Falls eine derartige abgewandelte Fahrzeugbewegungsbahn ABB existiert, wird das Fahrzeug 1 auf dieser in die finale Fahrzeugzielposition bewegt. (S31). Dies kann wiederum entweder direkt oder nach einer Eingabe (z.B. "Start Parkvorgang") des Fahrzeugnutzers 2 an dem Gerät 3 erfolgen. Dabei wird die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird entweder der Ausparkvorgang unterbrochen bzw. durch das Fahrzeug 1 ein Warnsignal abgegeben oder, falls eine weitere Abwandlung der Fahrzeugbewegungsbahn kollisionsfrei ist, diese weiter abgewandelte Bahn verwendet.

Falls keine kollisionsfreie Fahrzeugbewegungsbahn existiert, wird eine Fahrzeugbewegungsbahn für den Ausparkvorgang gewählt, die die Position des Fahrzeugnutzers 2 unberücksichtigt lässt. Dies kann beispielsweise eine bei der jeweiligen Parksituation anwendbare Standard-Auspark-Trajektorie sein.

Um eine Kollision des Fahrzeugs 1 mit dem Fahrzeugnutzer 2 auf der Fahrzeugbewegungsbahn zu vermeiden, wird eine Warnung an den Fahrzeugnutzer 2 abgegeben, dass dieser seine Position ändern muss, um den Ausparkvorgang zu ermöglichen (S32). Diese Warnung kann beispielsweise eine akustische oder Warnung durch das Fahrzeug selbst sein. Alternativ oder zusätzlich kann auf dem Gerät 3 eine optische Information, beispielsweise in Form einer Karte, angezeigt werden, mittels der der Fahrzeugnutzer informiert wird, in welche Richtung er sich zu bewegen hat, um den Parkvorgang zu ermöglichen.

Nachdem der Nutzer seine Position verändert hat, wird abschließend das Fahrzeug 1 auf die finale Fahrzeugzielposition bewegt (S33). Dies kann wiederum entweder direkt oder nach einer Eingabe (z.B. "Start Parkvorgang") des Fahrzeugnutzers 2 an dem Gerät 3 erfolgen. Dabei wird wiederum die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird der Ausparkvorgang entweder unterbrochen bzw. durch das Fahrzeug 1 ein Warnsignal abgegeben oder, falls eine weitere Abwandlung der Bewegungsbahn kollisionsfrei ist, diese weiter abgewandelte Bahn verwendet.

Vorzugsweise läuft die Kollisionsprüfung zwischen Fahrzeug 1 und Fahrzeugnutzer 2 solange, bis der Parkvorgang beendet wurde. Dadurch kann bei einer Bewegung des Fahrzeugnutzers 2 während des Parkvorgangs die Fahrzeugbewegungsbahn unter Berücksichtigung des Standorts des Fahrzeugnutzers 2 umgeplant werden. So kann beispielsweise bei einer Bewegung des Fahrzeugnutzers 2 bei einer Rückwärtsbewegung des Fahrzeugs 1 in die Fahrzeugbewegungsbahn das Fahrzeug vor dem Fahrzeugnutzer 2 gestoppt werden und dieses vorzeitige Stoppen des Fahrzeugs 1 beispielsweise durch einen stärkeren Lenkeinschlag beim nächsten Vorwärtszug kompensiert werden.

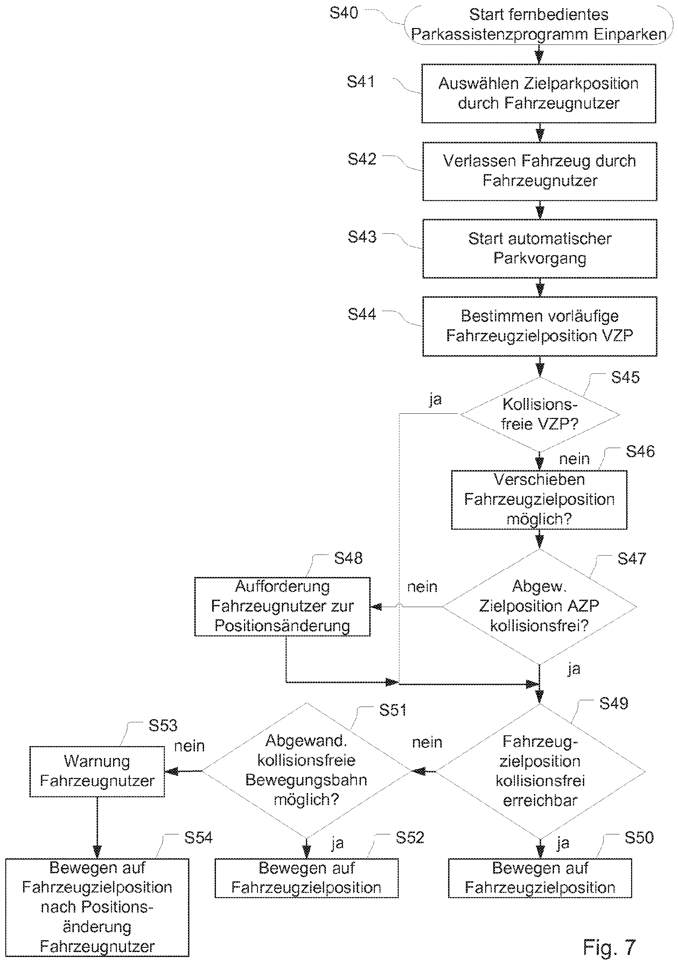

Fig. 7 zeigt ein Ausführungsbeispiel eines Kollisionsvermeidungsverfahrens bei einem vom Parkassistenzprogramm unterstützten Einparkvorgang. Zunächst wird in Schritt S40 das den Einparkvorgang vornehmende fernbediente Parkassistenzprogramm gestartet. Dies kann beispielsweise durch das Gerät 3, beispielsweise die Fernbedienung des Fahrzeugs 1 bzw. durch ein Smartphone o.ä. erfolgen.

Anschließend kann durch den Fahrzeugnutzer 2 eine Zielparkposition ausgewählt werden, in der das Fahrzeug 1 nach dem Einparkvorgang stehen soll (S41). Beispielsweise können an dem Gerät 3 an einer grafischen Nutzeroberfläche mehrere Optionen von Zielparkpositionen angegeben sein, aus denen der Fahrzeugnutzer 2 eine Zielparkposition auswählen kann.

Nach dem Verlassen des Fahrzeugs 1 durch den Fahrzeugnutzer 2 (S42) wird der automatische Parkvorgang gestartet (S43), d.h. das Parkassistenzsystem versucht, unter Berücksichtigung der Position des außerhalb des Fahrzeugs 1 befindlichen Fahrzeugnutzers 2 das Fahrzeug 1 in die ausgewählte Zielparkposition zu bringen.

Dabei wird zunächst eine vorläufige Fahrzeugzielposition VZP bestimmt (S44). Dies kann entweder automatisch ausschließlich durch das Parkassistenzsystem (ohne Einwirkung des Fahrzeugnutzers 2) erfolgen oder zumindest teilweise durch den Fahrzeugnutzer 2 beeinflusst werden (teilautomatisiert). Die vorläufige Fahrzeugzielposition VZP kann abhängig davon, ob eine parallele Einparksituation (Fahrzeuglängsachse ist parallel oder im Wesentlichen parallel zur Fahrbahn FB ausgerichtet) oder eine senkrechte Einparkposition (Fahrzeuglängsachse ist senkrecht oder im Wesentlichen senkrecht zur Fahrbahn FB ausgerichtet) vorliegt, gewählt werden.

Nach dem Bestimmen der vorläufigen Fahrzeugzielposition VZP wird überprüft, ob eine Kollision mit dem Fahrzeugnutzer 2 an der vorläufigen Fahrzeugzielposition VZP vorliegt (S45), d.h. sich der Fahrzeugnutzer 2 an der Position befindet, die das Parkassistenzsystem als vorläufige Fahrzeugzielposition VZP bestimmt hat. Wenn die vorläufige Fahrzeugzielposition VZP nicht mit der Position des Fahrzeugnutzers 2 kollidiert, wird das Verfahren an dem Schritt S49 fortgesetzt.

Falls eine Kollision zwischen der Position des Fahrzeugnutzers 2 und der vorläufigen Fahrzeugzielposition VZP vorliegt (Fahrzeugnutzer 2 steht beispielsweise in der Parklücke), wird geprüft, ob eine Verschiebung der Zielposition möglich ist (S46). In anderen Worten wird also versucht, die vorläufige Fahrzeugzielposition VZP auf eine abgewandelte Fahrzeugzielposition AZP zu verlegen bzw. zu verschieben. Diese abgewandelte Fahrzeugzielposition AZP kann insbesondere dadurch erhalten werden, dass die vorläufige Fahrzeugzielposition VZP entlang zumindest einer Raumrichtung (beispielsweise entlang der Längsrichtung der Fahrbahn FB oder quer zur Längsrichtung der Fahrbahn FB), vorzugsweise entlang zumindest zwei orthogonal zueinander verlaufenden Raumrichtungen (beispielsweise entlang der Längsrichtung der Fahrbahn FB und senkrecht zur Längsrichtung der Fahrbahn FB), verschoben wird.

Nach dieser Verlegung/Verschiebung wird überprüft, ob an der abgewandelten Fahrzeugzielposition AZP keine Kollision mit dem Fahrzeugnutzer vorliegt (S47). Die Schritte S46 und S47 können dabei mehrmals hintereinander durchlaufen werden, so dass mehrere unterschiedliche abgewandelte Fahrzeugzielpositionen AZP hinsichtlich der Kollisionsgefahr mit dem Fahrzeugnutzer 2 überprüft werden können.

Für den Fall, dass keine kollisionsfreie Fahrzeugzielposition gefunden werden kann, wird der Fahrzeugnutzer aufgefordert, seine aktuelle Position bzw. seinen Standort zu ändern (S48). Dies kann entweder durch akustische oder optische Signale erfolgen, die vom Fahrzeug 1 selbst oder vom Gerät 3 abgegeben werden. Beispielsweise kann durch das Gerät 3 angegeben werden, wohin bzw. in welche Richtung sich der Fahrzeugnutzer 2 bewegen soll. Diese Positionsänderungsangabe kann insbesondere berücksichtigen, welche Position des Fahrzeugnutzers 2 vorteilhaft ist, um eine kollisionsfreie Bewegung des Fahrzeugs 1 an eine gewünschte Fahrzeugzielposition (vorläufige Fahrzeugzielposition VZP oder abgewandelte Fahrzeugzielposition AZP) zu erreichen.

Nach Schritt S47 bzw. S48 steht eine finale Fahrzeugzielposition fest, in die das Fahrzeug 1 beim Einparkvorgang gebracht werden soll. Diese finale Fahrzeugzielposition kann entweder die zunächst bestimmte vorläufige Fahrzeugzielposition VZP oder die abgewandelte Fahrzeugzielposition AZP sein. Insbesondere kann die vorläufige Fahrzeugzielposition VZP dann als finale Fahrzeugzielposition festgelegt werden, wenn entweder in Schritt S45 festgestellt wird, dass diese vorläufige Fahrzeugzielposition VZP kollisionsfrei ist oder der Fahrzeugnutzer 2 in Schritt S48 seine Position derart geändert hat, dass die ursprünglich eine Kollision mit dem Fahrzeugnutzer 2 hervorrufende vorläufige Fahrzeugzielposition VZP nunmehr kollisionsfrei ist.

In Schritt S49 wird überprüft, ob diese finale Fahrzeugzielposition durch eine in dieser Parksituation üblicherweise verwendete Standard-Einpark-Trajektorie (vorläufige Fahrzeugbewegungsbahn VBB) kollisionsfrei zu erreichen ist (S49). In anderen Worten wird also überprüft, ob eine als durch das Parkassistenzsystem aufgrund von Standardgrundwerten (Kurvenradius, Anzahl der Parkzüge etc.) festgelegte Einpark-Bewegungsbahn bzw. Einpark-Trajektorie existiert, auf der das Fahrzeug 1 manövriert werden kann und auf der keine Kollision mit dem Fahrzeugnutzer 2 auftritt.

Für den Fall, dass keine Kollisionsgefahr auf der Standard-Einpark-Trajektorie besteht, wird das Fahrzeug 1 auf diese finale Fahrzeugzielposition durch Verwendung der Standard-Einpark-Trajektorie bewegt (S50). Dies kann entweder direkt oder nach einer Eingabe (z.B. "Start Parkvorgang") des Fahrzeugnutzers 2 an dem Gerät 3 erfolgen. Dabei wird die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird der Einparkvorgang unterbrochen bzw. durch das Fahrzeug 1 ein Warnsignal abgegeben.

Für den Fall, dass die Standard-Einpark-Trajektorie eine Kollision mit dem Fahrzeugnutzer 2 hervorruft, wird überprüft, ob es möglich ist, das Fahrzeug auf einer abgewandelten Fahrzeugbewegungsbahn ABB zu bewegen, auf der keine Kollision mit dem Fahrzeugnutzer 2 auftritt (S51).

Falls eine derartige abgewandelte Fahrzeugbewegungsbahn ABB existiert, wird das Fahrzeug 1 auf dieser in die finale Fahrzeugzielposition bewegt. (S52). Dies kann wiederum entweder direkt oder nach einer Eingabe (z.B. "Start Parkvorgang") des Fahrzeugnutzers 2 an dem Gerät 3 erfolgen. Dabei wird die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird der Einparkvorgang unterbrochen bzw. durch das Fahrzeug 1 ein Warnsignal abgegeben.

Falls keine kollisionsfreie Fahrzeugbewegungsbahn existiert, wird eine Fahrzeugbewegungsbahn für den Einparkvorgang gewählt, die die Position des Fahrzeugnutzers 2 unberücksichtigt lässt. Dies kann beispielsweise eine bei der jeweiligen Parksituation anwendbare Standard-Einpark-Trajektorie sein.

Um eine Kollision des Fahrzeugs 1 mit dem Fahrzeugnutzer 2 auf der Fahrzeugbewegungsbahn zu vermeiden, wird eine Warnung an den Fahrzeugnutzer 2 abgegeben, dass dieser seine Position ändern muss, um den Einparkvorgang zu ermöglichen (S53). Diese Warnung kann beispielsweise eine akustische oder Warnung durch das Fahrzeug 1 selbst sein. Alternativ oder zusätzlich kann auf dem Gerät 3 eine optische Information, beispielsweise in Form einer Karte, angezeigt werden, mittels der der Fahrzeugnutzer 2 informiert wird, in welche Richtung er sich zu bewegen hat, um den Parkvorgang zu ermöglichen.

Nachdem der Fahrzeugnutzer 2 seine Position verändert hat, wird anschließend das Fahrzeug 1 auf die finale Fahrzeugzielposition bewegt (S54). Dies kann wiederum entweder direkt oder nach einer Eingabe (z.B. "Start Parkvorgang") des Fahrzeugnutzers 2 an dem Gerät 3 erfolgen. Dabei wird wiederum die Position des Fahrzeugnutzers 2 überwacht, um sicherzugehen, dass dieser sich nicht in die geplante Fahrzeugbewegungsbahn hineinbewegt. Für den Fall, dass dieser sich in die Fahrzeugbewegungsbahn bewegt, wird der Einparkvorgang unterbrochen bzw. durch das Fahrzeug 1 ein Warnsignal abgegeben.

Vorzugsweise weist das Parkassistenzsystem Mittel zur Erkennung einer Situation auf, in der der Fahrzeugnutzer 2 in der Parklücke eingeschlossen wäre, wenn das Fahrzeug 1 in die Parkposition gebracht würde. Dies kann beispielsweise in Garagen der Fall sein, die zu drei Seiten hin Begrenzungen bzw. Wände aufweisen. Ein weiteres Beispiel sind Senkrecht-Einparksituationen, in denen eine Seite (beispielsweise die vordere Schmalseite der Parklücke) durch eine Wandung o.ä. und seitlich die Parklücke durch parkende Autos begrenzt ist.

Für den Fall, dass das Fahrzeug 1 durch das Parkassistenzsystem in eine solche Parklücke manövriert würde, wäre der Fahrzeugnutzer 2 in der Parklücke eingeschlossen. Um dies zu vermeiden, kann das Parkassistenzsystem zur Erfassung von Parksituationen ausgebildet sein, in denen die Parklücke zu drei Seiten hin derart begrenzt ist, so dass der Fahrzeugnutzer 2 nach Beendigung des Parkvorgangs die Parklücke nicht mehr verlassen könnte.

Für den Fall, dass das Parkassistenzsystem eine derartige Parksituation erkennt, kann der Parkvorgang vor der Parklücke unterbrochen bzw. beendet werden, so dass das Fahrzeug 1 in einem Abstand (beispielsweise 0,5m, 1 m oder 1,5m) vor der Parklücke positioniert wird. Anschließend kann der Fahrzeugnutzer 2 aufgefordert werden, die Parklücke zu verlassen. Dies kann beispielsweise durch akustische oder optische Signale des Fahrzeugs 1 selbst oder durch akustische oder optische Hinweise am Gerät 3 erfolgen. Dadurch kann ein "Einsperren" des Fahrzeugnutzers 2 in der Parklücke wirksam vermieden werden.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fahrzeug
- 2: Fahrzeugnutzer
- 3: Gerät
- 4: Parkassistenzsystem
- 4.1: Steuereinheit
- 4.2: Umgebungserfassungssensorik
- 4.3: Erfassungssensorik Standort Fahrzeugnutzer

- ABB: abgewandelte Fahrzeugbewegungsbahn
- AZP: abgewandelte Fahrzeugzielposition
- FB: Fahrbahn
- FSP: Fahzeugstartposition
- S: Signal
- VBB: vorläufige Fahrzeugbewegungsbahn
- VZP: vorläufige Fahrzeugzielposition

## Patentansprüche

1. Verfahren zur Steuerung eines Parkvorgangs eines Fahrzeugs (1) durch ein Parkassistenzsystem (4), umfassend folgende Schritte:
- Erfassen der Position eines in der Nähe aber außerhalb des Fahrzeugs, befindlichen Fahrzeugnutzers (2);
- Ermitteln einer vorläufigen Fahrzeugzielposition (VZP) und einer vorläufigen Fahrzeugbewegungsbahn (VBB) basierend auf einer der Fahrzeugstartposition (FSP) und der Position des Fahrzeugnutzers (2);
- Prüfen, ob die vorläufige Fahrzeugzielposition (VZP) und/oder das Bewegen des Fahrzeugs in die vorläufige Fahrzeugzielposition (VZP) auf der vorläufigen Fahrzeugbewegungsbahn (VBB) eine Kollision mit dem Fahrzeugnutzer (2) hervorruft;
- Verändern der vorläufigen Fahrzeugzielposition (VZP) in eine abgewandelte Fahrzeugzielposition (AZP) und/oder Verändern der vorläufigen Fahrzeugbewegungsbahn (VBB) in eine abgewandelte Fahrzeugbewegungsbahn (ABB), falls an der vorläufigen Fahrzeugzielposition (VZP) oder beim Bewegen des Fahrzeugs (1) in die vorläufige Fahrzeugzielposition (VZP) eine Kollision mit dem Fahrzeugnutzer (2) auftritt, wobei die abgewandelte Fahrzeugzielposition (AZP) und/oder die abgewandelte Fahrzeugbewegungsbahn (ABB) derart gewählt wird, dass an der abgewandelten Fahrzeugzielposition (AZP) und/oder beim Bewegen des Fahrzeugs (2) auf der abgewandelten Fahrzeugbewegungsbahn (ABB) keine Kollision mit dem Fahrzeugnutzer (2) auftritt;
- wobei das Parkassistenzsystem (4) zur Erfassung von Parksituationen, in denen der Fahrzeugnutzer (2) nach Einnehmen der Parkposition die Parklücke nicht mehr verlassen kann, ausgebildet ist;
- wobei der Parkvorgang vor dem Einfahren in die Parklücke unterbrochen und der Fahrzeugnutzer zum Verlassen der Parklücke aufgefordert wird, falls eine Parksituation erkannt wird, in der der Fahrzeugnutzer (2) nach Einnehmen der Parkposition die Parklücke nicht mehr verlassen kann.

2. Verfahren nach Anspruch 1, **dadurch gekennzeichnet, dass** an dem Fahrzeug (1) ein Signal (S) abgegeben wird und/oder an ein dem Fahrzeugnutzer (2) zugeordnetes Gerät (3) Hinweisinformationen übermittelt werden, die den Fahrzeugnutzer (2) darüber informieren, dass dieser seine aktuelle Position verändern muss, um einen Parkvorgang zu ermöglichen, wenn keine abgewandelte Fahrzeugzielposition (AZP) und/oder keine abgewandelte Fahrzeugbewegungsbahn (ABB) bestimmbar ist, die keine Kollision mit dem Fahrzeugnutzer (2) hervorruft.

3. Verfahren nach Anspruch 1 oder 2, **dadurch gekennzeichnet, dass** der Schritt des Veränderns der vorläufigen Fahrzeugzielposition (VZP) in eine abgewandelte Fahrzeugzielposition (AZP) ein Verändern der vorläufigen Fahrzeugzielposition (VZP) in zumindest eine, vorzugsweise in zwei unterschiedliche Raumrichtungen umfasst.

4. Verfahren nach einem der vorhergehenden Ansprüche, **dadurch gekennzeichnet, dass** die vorläufige Fahrzeugzielposition (VZP) oder die abgewandelte Fahrzeugzielposition (AZP) derart angepasst wird, dass sich nach dem Bewegen des Fahrzeugs (1) in die Fahrzeugzielposition (VZP, AZP) die Position der Fahrertür in engem räumlichem Zusammenhang mit der Position des Fahrzeugnutzers (2), vorzugsweise in einem Abstand kleiner als 2m, insbesondere kleiner 1m, befindet.

5. Verfahren nach einem der vorhergehenden Ansprüche, **dadurch gekennzeichnet, dass** die Anpassung der vorläufigen oder abgewandelten Fahrzeugzielposition (VZP, AZP) unter Berücksichtigung der Parktrajektorie erfolgt, auf der das Fahrzeug (1) beim Parkvorgang bewegt wird.

6. Verfahren nach einem der vorhergehenden Ansprüche, **dadurch gekennzeichnet, dass** während des Parkvorgangs die Position des Fahrzeugnutzers (2) überwacht wird.

7. Verfahren nach Anspruch 6, **dadurch gekennzeichnet, dass** die Geschwindigkeit des Fahrzeugs (1) beim Parkvorgang in Abhängigkeit vom Abstand zwischen dem Fahrzeug (1) und dem Fahrzeugnutzer (2) angepasst, insbesondere reduziert wird.

8. Verfahren nach Anspruch 6 oder 7, **dadurch gekennzeichnet, dass** an einem dem Fahrzeugnutzer (2) zugeordneten Gerät (3) optische Informationen angezeigt werden, in welche Richtung und/oder wie weit sich der Fahrzeugnutzer (2) bewegen soll.

9. Verfahren nach einem der vorhergehenden Ansprüche, **dadurch gekennzeichnet, dass** zumindest zwei vorläufige Fahrzeugzielpositionen (VZP) ermittelt werden und dass der Fahrzeugnutzer (2) an einem ihm zugeordneten Gerät (3) eine Auswahl einer zu verwendenden, vorläufigen Fahrzeugzielposition (VZP) trifft.

10. Verfahren nach Anspruch 9, **dadurch gekennzeichnet, dass** auf dem Gerät (3) eine bevorzugte vorläufige Fahrzeugzielposition (VZP) graphisch hervorgehoben und vorzugsweise vorläufig ausgewählt wird.

11. Verfahren nach einem der vorhergehenden Ansprüche, **dadurch gekennzeichnet, dass** die Erfassung der Position des Fahrzeugnutzers (2) durch Positionsbestimmung eines dem Fahrzeugnutzer zugeordneten Geräts (3) erfolgt, insbesondere eines Fahrzeugschlüssels, einer Fahrzeugbedienkarte oder eines mobilen Telekommunikationsgeräts.

12. Fahrzeug umfassend ein Parkassistenzsystem, eine erste Sensorik zur Erfassung von Umgebungsinformationen und eine zweite Sensorik zur Erfassung der Position eines dem Fahrzeugnutzer (2) zugeordneten Geräts (3), wobei zumindest eine Steuereinheit zur Steuerung des Parkassistenzsystems vorgesehen ist, die zum Ausführen der folgenden Schritte ausgebildet ist:
- Erfassen der Position eines in der Nähe aber außerhalb des Fahrzeugs (1) befindlichen Fahrzeugnutzers (2);
- Ermitteln einer vorläufigen Fahrzeugzielposition (VZP) und einer vorläufigen Fahrzeugbewegungsbahn (VBB) basierend auf einer Fahrzeugstartposition (FSP) und der Position des Fahrzeugnutzers (2);
- Prüfen, ob die vorläufige Fahrzeugzielposition (VZP) und/oder das Bewegen des Fahrzeugs in die vorläufige Fahrzeugzielposition (VZP) auf der vorläufigen Fahrzeugbewegungsbahn (VBB) eine Kollision mit dem Fahrzeugnutzer (2) hervorruft;
- Verändern der vorläufigen Fahrzeugzielposition (VZP) in eine abgewandelte Fahrzeugzielposition (AZP) und/oder Verändern der vorläufigen Fahrzeugbewegungsbahn (VBB) in eine abgewandelte Fahrzeugbewegungsbahn (ABB), falls an der vorläufigen Fahrzeugzielposition (VZP) oder beim Bewegen des Fahrzeugs (1) in die vorläufige Fahrzeugzielposition (VZP) eine Kollision mit dem Fahrzeugnutzer (2) auftritt, wobei die abgewandelte Fahrzeugzielposition (AZP) und/oder die abgewandelte Fahrzeugbewegungsbahn (ABB) derart gewählt wird, dass an der abgewandelten Fahrzeugzielposition (AZP) und/oder beim Bewegen des Fahrzeugs (2) auf der abgewandelten Fahrzeugbewegungsbahn (ABB) keine Kollision mit dem Fahrzeugnutzer (2) auftritt, wobei das Parkassistenzsystem (4) zur Erfassung von Parksituationen, in denen der Fahrzeugnutzer (2) nach Einnehmen der Parkposition die Parklücke nicht mehr verlassen kann, ausgebildet ist;
- wobei der Parkvorgang vor dem Einfahren in die Parklücke unterbrochen und der Fahrzeugnutzer zum Verlassen der Parklücke aufgefordert wird, falls eine Parksituation erkannt wird, in der der Fahrzeugnutzer (2) nach Einnehmen der Parkposition die Parklücke nicht mehr verlassen kann.

## Claims

1. Method for controlling a parking operation of a vehicle (1) by means of a parking assistance system (4), comprising the following steps:
- detecting the position of a vehicle user (2) situated in the vicinity of but outside the vehicle;
- determining a provisional vehicle target position (VZP) and a provisional vehicle motion path (VBB) on the basis of a vehicle starting position (FSP) and the position of the vehicle user (2);
- checking whether the provisional vehicle target position (VZP) and/or the motion of the vehicle into the provisional vehicle target position (VZP) on the provisional vehicle motion path (VBB) cause(s) a collision with the vehicle user (2);
- changing the provisional vehicle target position (VZP) into a modified vehicle target position (AZP) and/or changing the provisional vehicle motion path (VBB) into a modified vehicle motion path (ABB) if a collision with the vehicle user (2) occurs at the provisional vehicle target position (VZP) or during the motion of the vehicle (1) into the provisional vehicle target position (VZP), wherein the modified vehicle target position (AZP) and/or the modified vehicle motion path (ABB) are/is selected in such a way that no collision with the vehicle user (2) occurs at the modified vehicle target position (AZP) and/or during the motion of the vehicle (2) on the modified vehicle motion path (ABB);
- wherein the parking assistance system (4) is configured for detecting parking situations in which the vehicle user (2) can no longer leave the parking space once the parking position is occupied;
- wherein the parking operation is interrupted prior to driving into the parking space and the vehicle user is prompted to leave the parking space if a parking situation is identified in which the vehicle user (2) can no longer leave the parking space once the parking position is occupied.

2. Method according to Claim 1, **characterized in that** a signal (S) is emitted at the vehicle (1) and/or advice information is communicated to a device (3) assigned to the vehicle user (2), said information informing the vehicle user (2) that the latter must change their current position in order to enable a parking operation if no modified vehicle target position (AZP) and/or no modified vehicle motion path (ABB) which do(es) not cause a collision with the vehicle user (2) can be ascertained.

3. Method according to Claim 1 or 2, **characterized in that** the step of changing the provisional vehicle target position (VZP) into a modified vehicle target position (AZP) comprises changing the provisional vehicle target position (VZP) into at least one spatial direction, preferably into two different spatial directions.

4. Method according to any of the preceding claims, **characterized in that** the provisional vehicle target position (VZP) or the modified vehicle target position (AZP) is adapted in such a way that after the motion of the vehicle (1) into the vehicle target position (VZP, AZP), the position of the driver's door is in a close spatial relationship with the position of the vehicle user (2), preferably at a distance of less than 2 m, in particular less than 1 m.

5. Method according to any of the preceding claims, **characterized in that** the provisional or modified vehicle target position (VZP, AZP) is adapted taking account of the parking trajectory on which the vehicle (1) is moved during the parking operation.

6. Method according to any of the preceding claims, **characterized in that** the position of the vehicle user (2) is monitored during the parking operation.

7. Method according to Claim 6, **characterized in that** the speed of the vehicle (1) is adapted, in particular reduced, during the parking operation as a function of the distance between the vehicle (1) and the vehicle user (2).

8. Method according to Claim 6 or 7, **characterized in that** visual information regarding in which direction and/or how far the vehicle user (2) ought to move is displayed on a device (3) assigned to the vehicle user (2).

9. Method according to any of the preceding claims, **characterized in that** at least two provisional vehicle target positions (VZP) are determined, and **in that** the vehicle user (2), on a device (3) assigned to said vehicle user, makes a selection in respect of a provisional vehicle target position (VZP) to be used.

10. Method according to Claim 9, **characterized in that** a preferred provisional vehicle target position (VZP) is graphically highlighted and preferably provisionally selected on the device (3).

11. Method according to any of the preceding claims, **characterized in that** the position of the vehicle user (2) is detected by ascertaining the position of a device (3) assigned to the vehicle user, in particular a vehicle key, a vehicle operating card or a mobile telecommunication device.

12. Vehicle comprising a parking assistance system, a first sensor system for detecting surroundings information and a second sensor system for detecting the position of a device (3) assigned to the vehicle user (2), wherein at least one control unit for controlling the parking assistance system is provided, which is configured for carrying out the following steps:
- detecting the position of a vehicle user (2) situated in the vicinity of but outside the vehicle (1);
- determining a provisional vehicle target position (VZP) and a provisional vehicle motion path (VBB) on the basis of a vehicle starting position (FSP) and the position of the vehicle user (2);
- checking whether the provisional vehicle target position (VZP) and/or the motion of the vehicle into the provisional vehicle target position (VZP) on the provisional vehicle motion path (VBB) cause(s) a collision with the vehicle user (2);
- changing the provisional vehicle target position (VZP) into a modified vehicle target position (AZP) and/or changing the provisional vehicle motion path (VBB) into a modified vehicle motion path (ABB) if a collision with the vehicle user (2) occurs at the provisional vehicle target position (VZP) or during the motion of the vehicle (1) into the provisional vehicle target position (VZP), wherein the modified vehicle target position (AZP) and/or the modified vehicle motion path (ABB) are/is selected in such a way that no collision with the vehicle user (2) occurs at the modified vehicle target position (AZP) and/or during the motion of the vehicle (2) on the modified vehicle motion path (ABB), wherein the parking assistance system (4) is configured for detecting parking situations in which the vehicle user (2) can no longer leave the parking space once the parking position is occupied;
- wherein the parking operation is interrupted prior to driving into the parking space and the vehicle user is prompted to leave the parking space if a parking situation is identified in which the vehicle user (2) can no longer leave the parking space once the parking position is occupied.

## Revendications

1. Procédé permettant de commander une opération de stationnement d'un véhicule (1) par un système d'aide au stationnement (4), comprenant les étapes suivantes consistant à :
- détecter la position d'un utilisateur de véhicule (2) se trouvant à proximité mais à l'extérieur du véhicule ;
- établir une position cible de véhicule provisoire (VZP) et un trajet de déplacement de véhicule provisoire (VBB) sur la base d'une position initiale de véhicule (FSP) et de la position de l'utilisateur de véhicule (2) ;
- vérifier si la position cible de véhicule provisoire (VZP) et/ou le déplacement du véhicule vers la position cible de véhicule provisoire (VZP) sur le trajet de déplacement de véhicule provisoire (VBB) provoque une collision avec l'utilisateur de véhicule (2) ;
- modifier la position cible de véhicule provisoire (VZP) en position cible de véhicule modifiée (AZP) et/ou modifier le trajet de déplacement de véhicule provisoire (VBB) en trajet de déplacement de véhicule modifié (ABB) si une collision avec l'utilisateur de véhicule (2) survient à la position cible de véhicule provisoire (VZP) ou lors du déplacement du véhicule (1) dans la position cible de véhicule provisoire (VZP), dans lequel la position cible de véhicule modifiée (AZP) et/ou le trajet de déplacement de véhicule modifié (ABB) sont choisis de telle sorte qu'aucune collision avec l'utilisateur de véhicule (2) ne survienne à la position cible de véhicule modifiée (AZP) et/ou lors du déplacement du véhicule (2) sur le trajet de déplacement de véhicule modifié (ABB) ;
- dans lequel le système d'aide au stationnement (4) est réalisé pour détecter des situations de stationnement dans lesquelles l'utilisateur de véhicule (2) ne peut plus quitter la place de stationnement après avoir occupé la position de stationnement ;
- dans lequel l'opération de stationnement est interrompue avant l'entrée dans la place de stationnement et l'utilisateur de véhicule est invité à quitter la place de stationnement si une situation de stationnement est identifiée dans laquelle l'utilisateur de véhicule (2) ne peut plus quitter la place de stationnement après avoir occupé la position de stationnement.

2. Procédé selon la revendication 1, **caractérisé en ce qu'**un signal (S) est émis au niveau du véhicule (1) et/ou des informations sont transmises à un appareil (3) associé à l'utilisateur de véhicule (2) qui informent l'utilisateur de véhicule (2) qu'il doit changer sa position actuelle afin de permettre une opération de stationnement si aucune position cible de véhicule modifiée (AZP) et/ou aucun trajet de déplacement de véhicule modifié (ABB) qui ne provoquent aucune collision avec l'utilisateur de véhicule (2) ne peuvent être déterminés.

3. Procédé selon la revendication 1 ou 2, **caractérisé en ce que** l'étape de modification de la position cible de véhicule provisoire (VZP) en position cible de véhicule modifiée (AZP) comprend une modification de la position cible de véhicule provisoire (VZP) dans au moins une, de préférence dans deux directions spatiales différentes.

4. Procédé selon l'une quelconque des revendications précédentes, **caractérisé en ce que** la position cible de véhicule provisoire (VZP) ou la position cible de véhicule modifiée (AZP) est adaptée de telle sorte qu'après le déplacement du véhicule (1) vers la position cible de véhicule (VZP, AZP), la position de la portière du conducteur se trouve dans une relation spatiale étroite avec la position de l'utilisateur de véhicule (2), de préférence à une distance inférieure à 2 m, en particulier inférieure à 1 m.

5. Procédé selon l'une quelconque des revendications précédentes, **caractérisé en ce que** l'adaptation de la position cible de véhicule provisoire ou modifiée (VZP, AZP) est effectuée en tenant compte de la trajectoire de stationnement sur laquelle le véhicule (1) est déplacé lors de l'opération de stationnement.

6. Procédé selon l'une quelconque des revendications précédentes, **caractérisé en ce que** la position de l'utilisateur de véhicule (2) est surveillée pendant l'opération de stationnement.

7. Procédé selon la revendication 6, **caractérisé en ce que** la vitesse du véhicule (1) lors de l'opération de stationnement est adaptée, en particulier réduite, en fonction de la distance entre le véhicule (1) et l'utilisateur de véhicule (2).

8. Procédé selon la revendication 6 ou 7, **caractérisé en ce que** des informations optiques indiquant dans quelle direction et/ou jusqu'où l'utilisateur de véhicule (2) doit se déplacer sont affichées sur un appareil (3) associé à l'utilisateur de véhicule (2).

9. Procédé selon l'une quelconque des revendications précédentes, **caractérisé en ce qu'**au moins deux positions cible de véhicule provisoires (VPZ) sont établies, et **en ce que** l'utilisateur de véhicule (2) effectue sur un appareil (3) qui lui est associé une sélection d'une position cible de véhicule provisoire (VZP) à utiliser.

10. Procédé selon la revendication 9, **caractérisé en ce qu'**une position cible de véhicule provisoire (VZP) est mise en évidence de façon graphique et est de préférence sélectionnée provisoirement sur l'appareil (3).

11. Procédé selon l'une quelconque des revendications précédentes, **caractérisé en ce que** la détection de la position de l'utilisateur de véhicule (2) est effectuée par une détermination de position d'un appareil (3) associé à l'utilisateur de véhicule, en particulier une clé de véhicule, une carte de commande de véhicule ou un appareil de télécommunication mobile.

12. Véhicule, comprenant un système d'aide au stationnement, un premier système de capteurs pour détecter des informations environnementales et un deuxième système de capteurs pour détecter la position d'un appareil (3) associé à l'utilisateur de véhicule (2), dans lequel au moins une unité de commande est prévue pour commander le système d'aide au stationnement et qui est réalisée pour exécuter les étapes suivantes consistant à :
- détecter la position d'un utilisateur de véhicule (2) se trouvant à proximité mais à l'extérieur du véhicule (1) ;
- établir une position cible de véhicule provisoire (VZP) et un trajet de déplacement de véhicule provisoire (VBB) sur la base d'une position initiale de véhicule (FSP) et de la position de l'utilisateur de véhicule (2) ;
- vérifier si la position cible de véhicule provisoire (VZP) et/ou le déplacement du véhicule vers la position cible de véhicule provisoire (VZP) sur le trajet de déplacement de véhicule provisoire (VBB) provoque une collision avec l'utilisateur de véhicule (2) ;
- modifier la position cible de véhicule provisoire (VZP) en position cible de véhicule modifiée (AZP) et/ou modifier le trajet de déplacement de véhicule provisoire (VBB) en trajet de déplacement de véhicule modifié (ABB) si une collision avec l'utilisateur de véhicule (2) survient à la position cible de véhicule provisoire (VZP) ou lors du déplacement du véhicule (1) dans la position cible de véhicule provisoire (VZP), dans lequel la position cible de véhicule modifiée (AZP) et/ou la trajectoire de déplacement de véhicule modifiée (ABB) sont choisies de telle sorte qu'aucune collision avec l'utilisateur de véhicule (2) ne survienne à la position cible de véhicule modifiée (AZP) et/ou lors du déplacement du véhicule (2) sur la trajectoire de déplacement de véhicule modifiée (ABB), dans lequel le système d'aide au stationnement (4) est réalisé pour détecter des situations de stationnement dans lesquelles l'utilisateur de véhicule (2) ne peut plus quitter la place de stationnement après avoir occupé la position de stationnement ;
- dans lequel l'opération de stationnement est interrompue avant l'entrée dans la place de stationnement et l'utilisateur de véhicule est invité à quitter la place de stationnement si une situation de stationnement est identifiée dans laquelle l'utilisateur de véhicule (2) ne peut plus quitter la place de stationnement après avoir occupé la position de stationnement.
